# EUROPÄISCHE PATENTSCHRIFT

(11) **EP 2 269 853 B1**
(45) Veröffentlichungstag und Bekanntmachung des Hinweises auf die Patenterteilung: **28.12.2011**
(21) Anmeldenummer: 10002405.8
(22) Anmeldetag: 09.03.2010
(51) Int. Cl.: B60J 1/20, B60K 13/02

(54) **Kraftfahrzeug mit Luftleiteinrichtung**
Motor vehicle with spoiler
Véhicule automobile avec déflecteur

(30) Priorität: 01.07.2009 DE 102009031253
(43) Veröffentlichungstag der Anmeldung: 05.01.2011
(73) Patentinhaber: Dr. Ing. h.c. F. Porsche AG, 70435 Stuttgart (DE)
(72) Erfinder: Froeschle, Mathias, 73760 Ostfildern (DE); Larson, Grant, 71642 Ludwigsburg (DE)

(56) Entgegenhaltungen:
- DE-A1- 2 029 771
- DE-A1- 4 026 518
- US-A- 2 529 994
- US-A- 2 585 220
- US-A- 5 018 779

## Beschreibung

Bei der Erfindung wird ausgegangen von einem Kraftfahrzeug gemäß Oberbegriff des Patentanspruchs, wie beispielsweise in der DE 2 029 771 beschrieben ist.

Ein derartiges Kraftfahrzeug ist auch aus der US 4,275,915 bekannt. Es besitzt ein Fahrzeugdach mit jeweils einem seitlichen Dachlängsholm, unter denen Seitenscheiben des Kraftfahrzeugs angeordnet sind. An die Dachlängsholme schließen sich so genannte Finnen an, zwischen denen eine gegenüber dem Fahrzeugdach abgesetzte Deckelaußenhaut eines Heckdeckels angeordnet ist. Von dem Heckdeckel gehen aufrechte Seitenwände aus, die die Innenseiten der Finnen bilden.

Zudem ist aus der DE 30 17 919 ein Kraftfahrzeug bekannt, welches in oberhalb einer Fahrzeuggürtellinie liegenden Abschnitten der C-Säule Lufteinlässe aufweist, die innerhalb der Seitenwand des Kraftfahrzeugs zu einer Kühleinrichtung führen.

Es ist Aufgabe der Erfindung, ein Kraftfahrzeug der eingangs genannten Art zu optimieren.

Gelöst wird diese Aufgabe mit einem Kraftfahrzeug, welches die in Anspruch 1 genannten Merkmale aufweist. Vorteilhafte Ausgestaltungen sind Gegenstand der Unteransprüche.

Das erfindungsgemäße Fahrzeug gemäß Patentanspruch 1 zeichnet sich insbesondere dadurch aus, dass über die Lufteinlassöffnung, den zweikanaligen Luftkanal und die an der Innenseite der Finne liegende Luftauslassöffnung ein erster Teilluftstrom über die Deckelaußenhaut geleitet wird, wobei in besonders vorteilhafter Weise ein zweiter Teilluftstrom direkt für die Versorgung des Aggregateraums vom Luftstrom abgeteilt wird. Der über die Deckelaußenhaut geleitete erste Teilluftstrom dient der Anströmung der heckseitigen Luftleiteinrichtung. Damit lässt sich auch bei Kraftfahrzeugen mit der Finnenoptik einerseits das Aggregat mit der notwendigen Luft versorgen und andererseits kann die Luftleiteinrichtung eine optimierte Wirkung entfalten, wenn das Kraftfahrzeug in Betrieb ist. Durch den zweikanaligen Luftkanal kann die jeweilige Luftmenge für den Aggregateraum und die Luftleiteinrichtung den Anforderungen gemäß geteilt werden, je nachdem wie die Menge des Luftstromes in die Teilluftströme aufgeteilt wird. Der zweikanalige Luftkanal kann Prozessluft, beispielsweise Verbrennungsluft, der Antriebsmaschine direkt zuführen und/oder einen Luftstrom zur Spülung des Aggregateraums bereitstellen. Dies gilt insbesondere, wenn das Aggregat unterhalb der Deckelaußenhaut angeordnet ist. In bevorzugter Ausführungsform handelt es sich bei dem Aggregat also um die Antriebsmaschine des Kraftfahrzeugs. Es wäre jedoch auch denkbar, ein anderes Aggregat des Kraftfahrzeugs über den zweiten Teilluftstrom zu versorgen. Dieses Aggregat könnte beispielsweise eine Kühleinrichtung oder ähnliches sein. Denkbar wäre es auch, als Aggregat eine Energieversorgungseinrichtung des Kraftfahrzeugs mit Luft zu versorgen, wie beispielsweise eine Batterie oder dergleichen.

Besonders bevorzugt wird ein Ausführungsbeispiel, bei dem die Lufteinlassöffnung zwei Teilöffnungen aufweist, die entsprechend mit dem zweikanaligen Luftkanal in Verbindung stehen. Die Teilöffnungen können in der Ebene der Lufteinlassöffnung liegen. Alternativ kann sich der Luftkanal stromabwärts der Lufteinlassöffnung verzweigen, so dass die Teilöffnungen innerhalb des Luftkanals liegen.

Nach einem besonders bevorzugten Ausführungsbeispiel ist die heckseitige Luftleiteinrichtung ein Heckspoiler. Mit der erfindungsgemäßen Luftführung kann der Heckspoiler mit einem optimierten Luftstrom versorgt werden.

Ein ganz besonders bevorzugtes Ausführungsbeispiel zeichnet sich dadurch aus, dass der Luftleitkanal zumindest abschnittsweise zumindest teilweise transparent ausgebildet ist. Da die Finnen und damit auch der zweikanalige Luftkanal oberhalb der Gürtellinie liegen, wäre durch den zumindest teilweise teiltransparenten Luftkanal ein Blick nach schräg hinten aus dem Fahrzeuginnenraum möglich, so dass die Rundumsicht des Fahrzeugführers verbessert ist. Dies gilt insbesondere, wenn der Luftkanal mit einer Kanalwand an die Seitenscheibe anschließt. Denkbar wäre es also, zumindest die an die Seitenscheibe anschließende Kanalwand des Luftkanals zumindest teilweise bzw. abschnittsweise zumindest teiltransparent auszuführen.

Ein bevorzugtes Ausführungsbeispiel zeichnet sich dadurch aus, dass der Heckdeckel neben der Deckelaußenhaut eine davon ausgehende etwa aufrechte Seitenwand aufweist, die die Innenseite der Finne bildet und die die Luftauslassöffnung aufweist. Damit ist es auf einfache Art und Weise möglich, den ansonsten üblichen Dichtungsverlauf bei Kraftfahrzeugen mit Heckklappe beizubehalten und diesen nicht in den Bereich der Finnen oder ähnliches verlagern zu müssen.

Bevorzugt wird weiterhin ein Ausführungsbeispiel, bei dem der Luftkanal durch ein ein- oder mehrteiliges Bauteil gebildet wird. Der zweikanalige Luftkanal setzt somit die Lufteinlassöffnung fort und endet einerseits an der Luftauslassöffnung und andererseits in dem Aggregateraum, so dass die jeweilige Luftversorgung auf einfache Art und Weise bereitgestellt werden kann, insbesondere dann, wenn - wie vorstehend beschrieben - die Luftauslassöffnung Bestandteil der Seitenwand des Heckdeckels ist.

Bevorzugt ist das Kraftfahrzeug mit einer Antriebsmaschine in so genannter Mittelmotor- oder Heckmotoranordnung ausgestattet.

Der zweikanalige Luftkanal ist in bevorzugter Ausführungsform mit zwei Teilkanälen ausgeführt, von denen jeder eine Teilöffnung der Lufteinlassöffnung aufweist. Der erste Teilkanal führt bevorzugt zu der Luftauslassöffnung, während der zweite Teilkanal direkt mit dem Aggregateraum verbunden ist.

Ein vorteilhaftes Ausführungsbeispiel zeichnet sich durch eine Trennwand in dem Luftkanal aus, die die beiden Teilkanäle voneinander trennt. Dabei kann die Trennwand bis zur Lufteinlassöffnung reichen oder stromabwärts mit Abstand liegen. Die Trennwand könnte zumindest abschnittweise zumindest teiltransparent sein.

Besonders bevorzugt wird eine doppelwandige Trennwand vorgesehen, die einen optimierten Verlauf der Teilkanäle ermöglicht.

Die Erfindung wird nachfolgend anhand von Ausführungsbeispielen mit Bezug auf die Zeichnung näher erläutert: Es zeigen:
- Fig. 1: in einer Perspektive von schräg links hinten teilweise ein Kraftfahrzeug mit einem Fahrzeugdach, Finnen und einem Heckdeckel,
- Fig. 2: in einer Detaildarstellung den Heckdeckel und Luftkanäle und
- Fig. 3: einen Schnitt entlang der Linie III-III in Fig. 1.

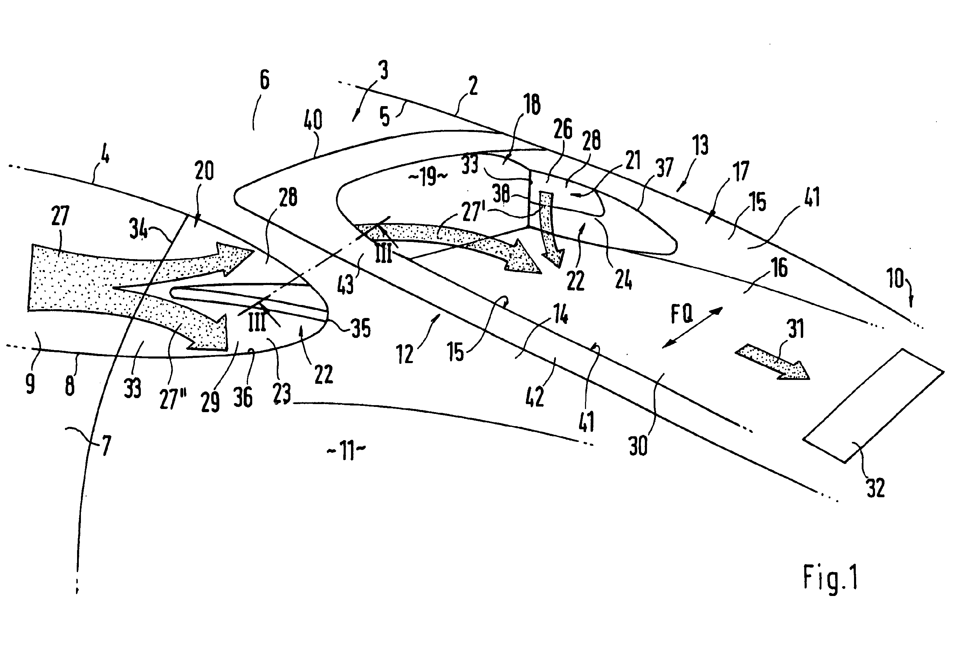

Fig. 1 zeigt ausschnittweise eine Karosserie 1 von einem Kraftfahrzeug 2. Von der Karosserie 1 ist dargestellt ein Fahrzeugdach 3, das zwischen zwei mit Abstand zueinander liegenden seitlichen Dachrahmen bzw. Dachlängsholmen 4 und 5 eine Dachplatte 6 aufweist. Ferner ist von der Karosserie 1 eine Seitentür 7 zu sehen, die oberhalb einer Gürtellinie 8 der Karosserie 1 eine Seitenscheibe 9 aufweist. Die Seitenscheibe 9 liegt somit unter dem Dachlängsholm 4. In Richtung Fahrzeugheck 10 schließt sich hinter der Seitentür 7 eine hintere Seitenwand 11 der Karosserie 1 an.

In Richtung Fahrzeugheck 10 sind die beiden seitlichen Dachlängsholme 4 und 5 mit einer Verlängerung in Form von so genannten Finnen 12 und 13 versehen. Jede Finne 12, 13 bildet einen oberhalb der Gürtellinie 8 verlaufenden Karosserieabschnitt, der in einer Draufsicht gesehen als streifenförmige Verlängerung der Dachlängsholme 4 und 5 ausgebildet ist. In Richtung Fahrzeugheck 10 fallen die Finnen in ihrer Höhe ab und bilden in einer Seitenansicht gesehen eine etwa dreieckförmige Wand. Jede Finne 12, 13 weist eine Außenseite 14 sowie eine Innenseite 15 auf. Zwischen den Innenseiten 15, die also mit einem in Fahrzeugquerrichtung FQ gemessenen Abstand zueinander liegen, ist eine Deckelaußenhaut 16 eines Heckdeckels 17 angeordnet. Bei einem derartigen Kraftfahrzeug 2 mit Finnen 12, 13 ist die Deckelaußenhaut 16 gegenüber dem

Fahrzeugdach 3 abgesetzt, d.h. zwischen Deckelaußenhaut 16 und Fahrzeugdach 3, insbesondere der Dachplatte 6, ist eine mehr oder weniger steil abfallende Stufe 18 gebildet. Innerhalb dieser Stufe 18 kann ein Heckfenster 19 angeordnet sein. In der gezeigten Ausführungsform steht das Heckfenster 19 etwa aufrecht, insbesondere senkrecht zwischen der Deckelaußenhaut 16 und dem Fahrzeugdach 3. Das Heckfenster 19 kann Bestandteil der Karosserie 1, daran also fest angebracht sein, oder aber Bestandteil des Heckdeckels 17 sein.

An zumindest einer Außenseite 14 der Finne 12 und/oder 13 ist eine Lufteinlassöffnung 20, 21 einer Luftführungseinrichtung 22 vorgesehen. Im Ausführungsbeispiel sind beide Finnen 12, 13 mit einer Lufteinlassöffnung 20, 21 ausgestattet, die benachbart zu der jeweiligen Seitenscheibe 8 angeordnet sind. An jede Lufteinlassöffnung 20, 21 schließt sich ein nach innen gerichteter, zweikanaliger Luftkanal 23, 24 an, von denen jeder zumindest teilweise zu an den Innenseiten 15 der Finnen 12, 13 liegenden Luftauslassöffnungen 25, 26 führt. Durch die so gebildete Luftführungseinrichtungen 22 wird von jeder Fahrzeugseite ein Luftstrom 27 abgeleitet und in den Bereich zwischen die Finnen 12, 13 geführt. An der jeweiligen Luftauslassöffnung 25, 26 kommt ein erster Teilluftstrom 27' an. Nachdem der Teilluftstrom 27' bzw. die Teilluftströme 27' den Luftkanal 23 bzw. 24 und die jeweilige Luftauslassöffnung 25, 26 passiert hat/haben, strömt dieser/diese über die Deckelaußenhaut 16 in Richtung Fahrzeugheck 10.

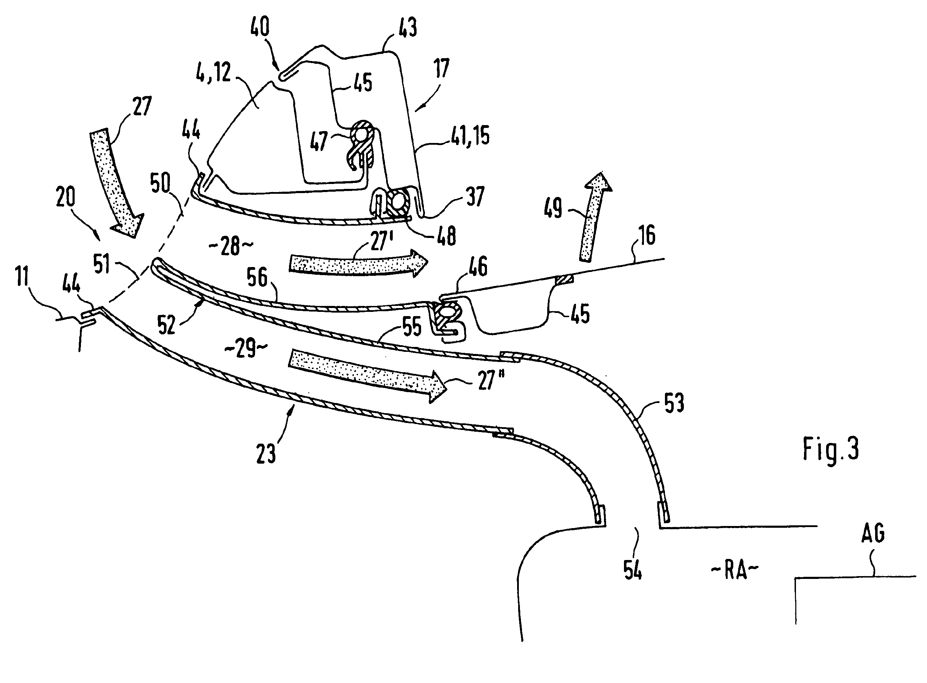

Der Luftkanal 23, 24 ist zweikanalig bzw. zweiflutig ausgeführt und weist zwei Teilkanäle 28, 29 auf. Jeder Teilkanal 28 der Luftkanäle 23, 24 führt zu der zugehörenden Luftauslassöffnung 25, 26 und leitet den jeweiligen Teilluftstrom 27' auf die Deckelaußenhaut 16. Die anderen beiden Teilkanäle 29 führen zu einem unter dem Heckdeckel 17 liegenden Aggregateraum RA (Fig. 3), wobei dies lediglich für den linken Teilkanal 29 dargestellt ist. Dadurch wird von dem Luftstrom 27 ein zweiter Teilluftstrom 27" durch den Teilkanal 29 direkt in den Aggregateraum RA geleitet. Der erste Teilluftstrom 27' dient als Anströmung 31, die über das Deckelaußenblech 16 hinweg in Richtung Fahrzeugheck 10 zu einer heckseitigen Luftleiteinrichtung 32 des Kraftfahrzeugs 2 gelangt. Entsprechendes gilt auch für die der rechten Fahrzeugseite zugeordnete Luftführungseinrichtung 22 mit der Luftauslassöffnung 24. Die Luftleiteinrichtung 32 liegt also hinter dem bzw. stromabwärts zu dem Luftauslassöffnungen 26, 26. Die Luftleiteinrichtung 32 kann auf der Deckelaußenhaut 16 oder stromabwärts an einem anderen Teil der Karosserie 1 angebracht sein. Zwischen Luftauslassöffnung 25, 26 und Luftleiteinrichtung 32 bildet die Deckelaußenhaut eine Strömungsleitfläche 30 für die Anströmung 31.

Die heckseitige Luftleiteinrichtung 32 ist insbesondere als Heckspoiler ausgebildet, der beispielsweise auf dem Heckdeckel 17 oder dahinter angeordnet sein kann. Die heckseitige Luftleiteinrichtung 32 kann feststehend oder ein- und ausfahrbar und/oder ggf. in der Neigung verstellbar ausgebildet sein. Dadurch, dass die Anströmung 31 von zumindest einem der Teilluftströme 27' abgeleitet wird, kann die heckseitige Luftleiteinrichtung 32 optimiert angeströmt werden, obwohl die Luftströmung über das Fahrzeugdach 3 durch die Stufe 18 gestört sein kann.

Wie Fig. 1 zeigt, schließt eine den Luftkanal 23, 24 begrenzende Kanalwand 33 des Luftkanals 23 unmittelbar an die Seitenscheibe 9 an. Die Lufteinlassöffnung 20 wird daher begrenzt von dem hinteren Rand 34 der Seitenscheibe 9 und einem Ausschnitt 35 in der Karosserieseitenwand 11, und zwar oberhalb der Gürtellinie 8. Die Kanalwand 33 kann zumindest teilweise zumindest teiltransparent ausgeführt sein, so dass aus dem Fahrzeuginnenraum schräg nach hinten durch die Kanalwand 33 hindurchgeblickt werden kann. Die übrige Kanalwand 36 des Luftkanals 23 könnte ebenfalls zumindest abschnittweise zumindest teiltransparent ausgeführt sein. In bevorzugter Ausführungsform ist jedoch die Kanalwand 33 zwischen der Lufteinlassöffnung 20 und der Luftauslassöffnung 25 zumindest teiltransparent ausgeführt, während die übrige Kanalwand 36 undurchsichtig sein kann. Für die Lufteinlassöffnung 21 bzw. den Luftkanal 24 gilt dies in analoger Weise. Die Luftauslassöffnung 26 wird begrenzt von einem Ausschnitt 37 an der Innenseite 15 der Finne 13 und von einem seitlichen, aufrecht verlaufenden Rand 38 des Heckfensters 19.

Im gezeigten Ausführungsbeispiel ist der Heckdeckel 17 in einen Karosserieausschnitt 40 eingepasst, der sich über die jeweilige Karosserieseitenwand 11 und das Fahrzeugdach 3 hinein erstreckt. Der Heckdeckel 17 besitzt somit neben der Deckelaußenhaut 16 jeweils seitlich außenliegende, davon ausgehende etwa aufrecht verlaufende Seitenwände 41, die die Innenseite der Finnen 12, 13 bilden und somit die Luftauslassöffnungen 25, 26 bzw. die Ausschnitte 37 aufweisen. Die beiden aufrechten Seitenwände 41 gehen in einen die Oberseite 42 der Finnen 12, 13 bildenden Rahmenabschnitt 43 über, der in Draufsicht gesehen U-förmig ausgeführt ist, und sich so bis an die Dachplatte 6 erstreckt.

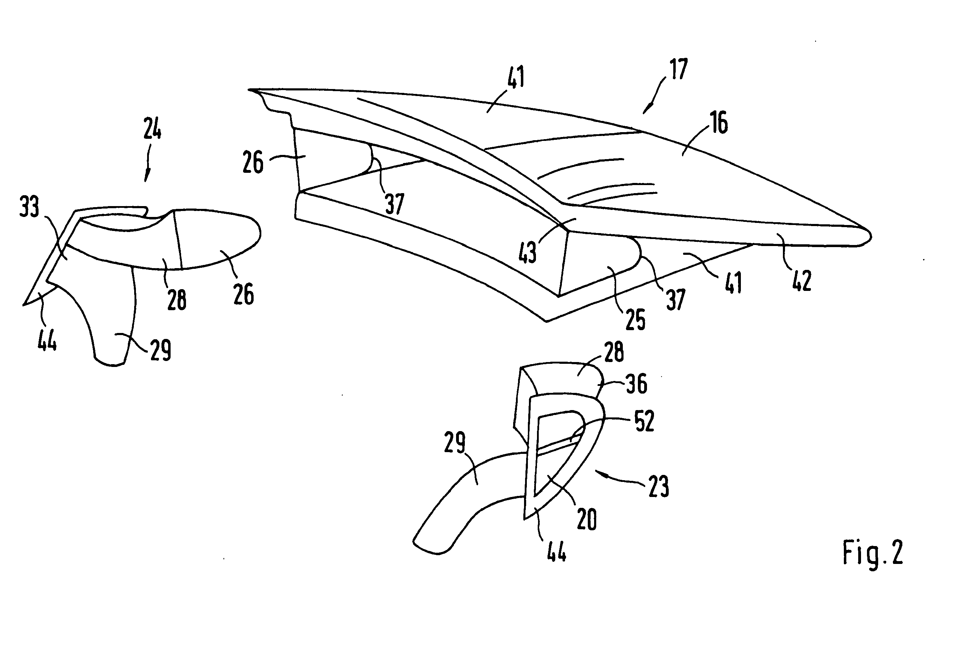

Wie Fig. 2 zeigt, können die Luftkanäle 23 und 24 als ein- oder mehrteilige Baugruppen ausgebildet sein. Insbesondere sind hierfür Kunststoffteile vorgesehen. Im Bereich der Lufteinlassöffnungen 20, 21 kann der Luftkanal 23, 24 einen Kragen bzw. Flansch 44 aufweisen, der beispielsweise umlaufend ausgebildet sein kann und - wie Fig. 3 zeigt - an der Karosserie 2 des Kraftfahrzeugs 1 anliegen kann. Der Querschnitt des Luftkanals 23, 24 bzw. der Teilkanäle 28, 29 kann beliebig ausgeführt sein, beispielsweise eckig oder kreisförmig sein. Wie im gezeigten Ausführungsbeispiel dargestellt, ist insbesondere vorgesehen, dass sich der Teilkanal 28 von der Einlassöffnung 20 bzw. 21 stromabwärts trichterförmig bis zur jeweiligen Luftauslassöffnung 25, 26 erweitert. Der Querschnitt kann dabei konstant oder sich verändernd ausgebildet sein. Insbesondere ist der Querschnitt im Bereich der Luftauslassöffnung und der -einlassöffnung halbkreisförmig oder entspricht etwa der Hälfte eines Ovals bzw. einer Ellipse. Die Querschnitte der Teilkanäle 28, 29 können gleich oder unterschiedlich bemessen sein, je nachdem, welche Luftmengen als Anströmung 31 und als Teilluftstrom 27" benötigt werden. Im Übrigen sind in den Fig. 1 und 2 gleiche bzw. gleichwirkende Teile mit den gleichen Bezugszeichen versehen, so dass auf deren Beschreibung verwiesen wird. Dies gilt im Übrigen auch für die Schnittdarstellung gemäß Fig. 3, auf die nachfolgend näher eingegangen wird. Der Heckdeckel 17 besitzt das Deckelaußenblech 16, welches noch die aufrechten Seitenwände 41 sowie die den umlaufenden Rahmen 43 bildende Oberseite 42 aufweist. Der Heckdeckel 17 ist zweischalig mit dem Deckelaußenblech 16 und einem Deckelinnenblech 45 realisiert, wobei Deckelaußenblech und Deckelinnenblech an ihrem Randbereich 46 gefügt sind. Ebenfalls ist der Dachlängsholm 4 bzw. die Finne 12 im Schnitt dargestellt, der/die als Hohlprofil ausgebildet ist und abschnittweise den Karosserieausschnitt 40 aufweist. Zwischen Deckelinnenblech 45 und Finne 12 bzw. Dachlängsholm 4 ist eine erste Deckeldichtung 47 angeordnet, die insbesondere umlaufend an dem Karosserieausschnitt 40 angebracht ist. Der Ausschnitt 37 an der Innenseite 15 der Finne 12 ist gegenüber dem Teilkanal 28 durch eine weitere Dichtungseinrichtung 48 abgedichtet. Dabei sind die Dichtungseinrichtungen 47 und 48 so angeordnet, dass der Heckdeckel 17 in der in Fig. 1 gezeigten Schließstellung auf ihnen aufliegt, für ein Öffnen des Deckels 17 dieser jedoch von den Dichtungseinrichtungen 47 und 48 abgehoben werden kann. Insbesondere ist dabei vorgesehen, dass der Deckel 17 über eine benachbart zum Fahrzeugdach 3 liegende hier nicht dargestellte Schwenkachse bewegt werden kann, wobei in Fig. 3 durch einen Pfeil 49 die nach oben gerichtete Öffnungsbewegung angedeutet ist.

Aus dem Schnitt nach Fig. 3 ist weiter der zweikanalige Luftkanal 23 mit seinen beiden Teilkanälen 28, 29 ersichtlich. Für den nicht dargestellten Luftkanal 24 gilt nachfolgende Beschreibung entsprechend. Der Teilkanal 28 besitzt eine erste Teilöffnung 50 der Lufteinlassöffnung 20, während dem Teilkanal 29 eine zweite Teilöffnung 51 zugeordnet ist. Beide Teilöffnungen 50, 51 können - wie dargestellt - übereinander, hintereinander oder ggf. auch ineinander angeordnet sein, d.h. die Teilöffnungen 50, 51 können koaxial angeordnet sein, wobei eine Teilöffnung die andere Teilöffnung umgibt. Mithin wird jede Teilöffnung 50, 51 begrenzt von den Kanalwänden 33, 36 und einer die Teilkanäle voneinander trennenden Trennwand 52, die innerhalb des Luftkanals 23, 24 in Strömungsrichtung verläuft. Die beiden Teilöffnungen 50, 51 können in der Ebene der Lufteinlassöffnung 20, 21 liegen, in der auch der Flansch 44 liegt, oder gegenüber dieser Ebene in den Luftkanal 23 hinein zurückversetzt sein, wenn die Trennwand 52 nicht bis in die Einlassöffnung 20 reicht; im Ausführungsbeispiel reicht die Trennwand 52 bis in die Lufteinlassöffnung 20.

Wie erwähnt führt der Teilkanal 28 von der Lufteinlassöffnung 20 bzw. seiner Teilöffnung 50 bis zur Luftauslassöffnung 25 über der Deckelaußenhaut 16. Der Teilkanal 29 hingegen verläuft nach einem zu dem Teilkanal 28 etwa parallelen Abschnitt nach unten gerichtet, um über einen Kanalbogen 53 weiter in Richtung Aggregateraum RA abzufallen, der einen Versorgungslufteinlass 54 besitzt, der an den Teilkanal 29 angeschlossen ist.

Die Trennwand 52 ist doppelwandig mit einer ersten Wand 55 und einer zweiten Wand 56 ausgeführt, die im Bereich der Teilöffnungen 50, 51 miteinander verbunden sind. Dabei bildet die erste Wand 55 eine Kanalwand für den zweiten Teilkanal 29 und die zweite Wand 56 eine Kanalwand für den ersten Teilkanal 28. Eine einfache Trennwand 52 kann alternativ vorgesehen sein.

Vorstehend wurde der Luftkanal 23 bzw. die Luftversorgungseinrichtung 22 an der linken Fahrzeugseite beschrieben. Grundsätzlich kann die Luftversorgungseinrichtung 22 an der rechten Fahrzeugseite mit dem Luftkanal 24 funktional identisch ausgeführt sein. Denkbar wäre aber auch, den Teilluftkanal 29 des Luftkanals 24 nicht als Luftzufuhr mit dem Teilstrom 27' vorzusehen, sondern als Luftabfuhr für den über den Luftkanal 23 zugeführten Teilstrom 27'. Alternativ wäre es möglich, einen der Teilkanäle 29 der beiden Luftkanäle 23 oder 24 für die Zufuhr von Prozessluft, beispielsweise Verbrennungsluft, für das im Aggregateraum RA angeordnete Aggregat AG zu verwenden, während der andere der Teilkanäle 29 der Luftkanäle 24 oder 23 zur Luftspülung des Aggregateraums RA verwendet wird.

## Patentansprüche

1. Kraftfahrzeug (2) mit einem Fahrzeugdach (3) mit zwei seitlichen Dachlängsholmen (4, 5), unter denen Seitenscheiben (9) angeordnet sind und an die sich als Verlängerung der Dachlängsholme (4, 5) jeweils eine Finne (12, 13) anschließt, und mit einer zwischen den Finnen (12, 13) angeordneten Deckelaußenhaut (16) eines Heckdeckels (17), **dadurch gekennzeichnet, dass** zumindest an einer der Finnen (12, 13) an ihrer Außenseite (14) benachbart zu der Seitenscheibe (9) eine Lufteinlassöffnung (20, 21) ausgebildet ist, die über einen zweikanaligen Luftkanal (23, 24) einerseits mit einer benachbart zur Deckelaußenhaut (16) an der Innenseite (15) der Finne (12, 13) liegenden Luftauslassöffnung (25, 26) und andererseits mit einem Aggregateraum (RA) für ein Aggregat (AG) des Kraftfahrzeugs (2) verbunden ist, und dass hinter der Luftauslassöffnung (25, 26) eine heckseitige Luftleiteinrichtung (32) angeordnet ist.

2. Kraftfahrzeug nach Anspruch 1, **dadurch gekennzeichnet, dass** das Aggregat (AG), insbesondere eine Antriebsmaschine, unterhalb der Deckelaußenhaut (16) angeordnet ist.

3. Kraftfahrzeug nach Anspruch 1, **dadurch gekennzeichnet, dass** die Lufteinlassöffnung (20, 21) zwei Teilöffnungen (50, 51) aufweist.

4. Kraftfahrzeug nach Anspruch 1, **dadurch gekennzeichnet, dass** die heckseitige Luftleiteinrichtung (32) ein Heckspoiler ist.

5. Kraftfahrzeug nach Anspruch 1, **dadurch gekennzeichnet, dass** der Luftkanal (23, 24) zumindest abschnittweise zumindest teiltransparent ausgebildet ist.

6. Kraftfahrzeug nach Anspruch 1 oder 5, **dadurch gekennzeichnet, dass** der Luftkanal (23, 24) mit einer Kanalwand (33) an die Seitenscheibe (9) anschließt.

7. Kraftfahrzeug nach Anspruch 1, **dadurch gekennzeichnet, dass** der Heckdeckel (17) neben der Deckelaußenhaut (16) eine davon ausgehende etwa aufrechte Seitenwand (41) aufweist, die die Innenseite (15) der Finne (12, 13) bildet und dass die Seitenwand (41) die Luftauslassöffnung (25, 26) aufweist.

8. Kraftfahrzeug nach einem der vorhergehenden Ansprüche, **dadurch gekennzeichnet, dass** der Luftkanal (23, 24) durch ein ein- oder mehrteiliges Bauteil gebildet ist.

9. Kraftfahrzeug nach einem der vorhergehenden Ansprüche, **dadurch gekennzeichnet, dass** das Aggregat (AG) als Mittel- oder Heckmotor im Kraftfahrzeug (2) angeordnet ist.

10. Kraftfahrzeug nach einem der vorhergehenden Ansprüche, **dadurch gekennzeichnet, dass** der zweikanalige Luftkanal (23, 24) zwei Teilkanäle (28, 29) aufweist, von denen jeder eine Teilöffnung (50, 51) der Lufteinlassöffnung (20, 21) besitzt.

11. Kraftfahrzeug nach Anspruch 10, **dadurch gekennzeichnet, dass** einer der Teilkanäle (29) mit einem Versorgungslufteinlass (54) im Aggregateraum (RA) verbunden ist.

12. Kraftfahrzeug nach Anspruch 10 oder 11, **dadurch gekennzeichnet, dass** der Luftkanal (23, 24) eine die Teilkanäle (28, 29) trennende Trennwand (52) aufweist, die vorzugsweise bis an die Lufteinlassöffnung (20, 21) heranreicht.

13. Kraftfahrzeug nach einem der vorhergehenden Ansprüche 10-12, **dadurch gekennzeichnet, dass** der Luftkanal (23, 24) eine die Teilkanäle (28, 29) trennende Trennwand (52) aufweist, die doppelwandig ausgeführt ist.

## Claims

1. Motor vehicle (2) with a vehicle roof (3) with two lateral longitudinal roof members (4, 5), under which side windows (9) are arranged and adjoining which, as an extension of the longitudinal roof members (4, 5), there is in each case one fin (12, 13), and with an outer skin (16), arranged between the fins (12, 13), of a rear deck lid (17), **characterized in that** an air inlet opening (20, 21) is formed at least on one of the fins (12, 13), on the outer side (14) thereof and adjacent to the side window (9), which air inlet opening is connected by a two-channel air duct (23, 24), on the one hand to an air outlet opening (25, 26) situated adjacent to the outer skin (16) of the lid on the inner side (15) of the fin (12, 13) and, on the other hand, to an assembly compartment (RA) for an assembly (AG) of the motor vehicle (2), and **characterized in that** a rear air deflection device (32) is arranged behind the air outlet opening (25, 26).

2. Motor vehicle according to Claim 1, **characterized in that** the assembly (AG), in particular a driving engine, is arranged under the outer skin (16) of the lid.

3. Motor vehicle according to Claim 1, **characterized in that** the air inlet opening (20, 21) has two component openings (50, 51).

4. Motor vehicle according to Claim 1, **characterized in that** the rear air deflection device (32) is a rear spoiler.

5. Motor vehicle according to Claim 1, **characterized in that** the air duct (23, 24) is of at least partially transparent design, at least sectionwise.

6. Motor vehicle according to Claim 1 or 5, **characterized in that** the air duct (23, 24) adjoins the side window (9) by means of a duct wall (33).

7. Motor vehicle according to Claim 1, **characterized in that**, in addition to the outer skin (16) of the lid, the rear deck lid (17) has an approximately upright side wall (41) which starts therefrom and forms the inner side (15) of the fin (12, 13), and **characterized in that** the side wall (41) has the air outlet opening (25, 26).

8. Motor vehicle according to one of the preceding claims, **characterized in that** the air duct (23, 24) is formed by a one- or multi-piece component.

9. Motor vehicle according to one of the preceding claims, **characterized in that** the assembly (AG) is arranged as a mid- or rear engine in the motor vehicle (2).

10. Motor vehicle according to one of the preceding claims, **characterized in that** the two-channel air duct (23, 24) has two component ducts (28, 29), each of which has a component opening (50, 51) of the air inlet opening (20, 21).

11. Motor vehicle according to Claim 10, **characterized in that** one of the component ducts (29) is connected to a supply air inlet (54) in the assembly compartment (RA).

12. Motor vehicle according to Claim 10 or 11, **characterized in that** the air duct (23, 24) has a dividing wall (52) which divides the component ducts (28, 29) and preferably extends as far as the air inlet opening (20, 21).

13. Motor vehicle according to one of the preceding Claims 10-12, **characterized in that** the air duct (23, 24) has a dividing wall (52) which divides the component ducts (28, 29) and is of double-walled construction.

## Revendications

1. Véhicule automobile (2) équipé d'un toit de véhicule (3) doté de deux longerons de toit (4, 5), latéraux en dessous desquels les vitres latérales (9) sont disposées et au niveau desquels un aileron (12, 13) est respectivement rattaché pour servir de prolongement aux longerons de toit (4, 5) et avec un revêtement extérieur de cache (16) d'un hayon arrière (17) disposé entre les ailerons (12, 13), **caractérisé en ce qu'**au moins une ouverture d'admission d'air (20, 21) est réalisée au niveau d'un des ailerons (12, 13), notamment au niveau de son côté extérieur (14), à proximité de la vitre latérale (9), ladite ouverture étant reliée d'une part à une ouverture d'échappement d'air (25, 26) située à proximité du revêtement extérieur de cache (16) au niveau du côté intérieur (15) de l'aileron (12, 13) via un canal d'air (23, 24) à deux canaux et d'autre part à une chambre d'agrégat (RA) prévue pour un agrégat (AG) du véhicule automobile (2) et **en ce qu'**un déflecteur (32) situé côté arrière est disposé derrière l'ouverture d'échappement d'air (25, 26).

2. Véhicule automobile selon la revendication 1, **caractérisé en ce que** l'agrégat (AG), notamment un moteur d'entraînement, est disposé en dessous du revêtement extérieur de cache (16).

3. Véhicule automobile selon la revendication 1, **caractérisé en ce que** l'ouverture d'admission d'air (20, 21) comporte deux ouvertures partielles (50, 51).

4. Véhicule automobile selon la revendication 1, **caractérisé en ce que** le déflecteur (32) situé à l'arrière est un spoiler arrière.

5. Véhicule automobile selon la revendication 1, **caractérisé en ce que** le canal d'air (23, 24) est réalisé au moins en partie au moins de façon en partie transparent.

6. Véhicule automobile selon la revendication 1 ou 5, **caractérisé en ce que** le canal d'air (23, 24) touche la vitre latérale (9) par le biais d'une paroi de canal (33).

7. Véhicule automobile selon la revendication 1, **caractérisé en ce que** le cache arrière (17) comporte, outre le revêtement extérieur de cache (16), une paroi latérale (41) droite par rapport au cache qui forme le côté intérieur (15) de l'aileron (12, 13) et que la paroi latérale (41) comporte l'ouverture d'échappement d'air (25, 26).

8. Véhicule automobile selon l'une quelconque des revendications précédentes, **caractérisé en ce que** le canal d'air (23, 24) est formé par un composant réalisé en une ou plusieurs parties.

9. Véhicule automobile selon l'une quelconque des revendications précédentes, **caractérisé en ce que** l'agrégat (AG) prend la forme d'un moteur central ou arrière dans le véhicule automobile (2).

10. Véhicule automobile selon l'une quelconque des revendications précédentes, **caractérisé en ce que** le canal d'air (23, 24) à deux canaux comporte deux canaux partiels (28, 29) donc chacun possède une ouverture partielle (50, 51) de l'ouverture d'admission d'air (20, 21).

11. Véhicule automobile selon la revendication 10, **caractérisé en ce qu'**un des canaux partiels (29) est relié à une admission d'air d'alimentation (54) prévue dans la chambre d'agrégat (RA).

12. Véhicule automobile selon la revendication 10 ou 11, **caractérisé en ce que** le canal d'air (23, 24) comporte une paroi de séparation (52) séparant les canaux partiels (28, 29), ladite paroi allant de préférence jusqu'à l'ouverture d'admission d'air (20, 21).

13. Véhicule automobile selon l'une quelconque des revendications précédentes 10 à 12, **caractérisé en ce que** le canal d'air (23, 24) comporte une paroi de séparation (52) à paroi double séparant les canaux partiels (28, 29).
